# EUROPÄISCHE PATENTSCHRIFT

(11) **EP 2 960 277 B1**
(45) Veröffentlichungstag und Bekanntmachung des Hinweises auf die Patenterteilung: **12.10.2016**
(21) Anmeldenummer: 15172179.2
(22) Anmeldetag: 15.06.2015
(51) Int. Cl.: C08K 3/00, C08K 3/26, C08K 3/36, C08L 33/00, C08L 67/00

(54) **VERBUNDWERKSTOFF MIT VERÄNDERTEM QUERVERNETZUNGSGRAD UND VERFAHREN ZU DESSEN HERSTELLUNG**
COMPOSITE MATERIAL WITH ALTERED CROSS-LINKING DEGREE AND METHOD FOR PRODUCING THE SAME
MATIÈRE PREMIÈRE COMPOSITE DOTÉE D'UN DEGRÉ DE RÉTICULATION MODIFIÉ ET SON PROCÉDÉ DE FABRICATION

(30) Priorität: 25.06.2014 DE 102014108931; 26.06.2014 DE 102014109021
(43) Veröffentlichungstag der Anmeldung: 30.12.2015
(73) Patentinhaber: Gebrüder Dorfner GmbH & Co. Kaolin- und Kristallquarzsand-Werke KG, 92242 Hirschau (DE)
(72) Erfinder: Hoitmann, Klaus Dr., D-92224 Amberg (DE)
(74) Vertreter: Hannke, Christian

(56) Entgegenhaltungen:
- DE-A1- 19 812 123

## Beschreibung

Die vorliegende Erfindung betrifft einen Verbundwerkstoff, umfassend mindestens ein quervernetztes Polymer und eine erste Füllstofffraktion, wobei die erste Füllstofffraktion 10 % - 80% Füllstoffe A einer Härte nach Mohs von < 5,5 und einem Partikeldurchmesser d₅₀ < 100 µm umfasst. Weiterhin betrifft die Erfindung ein Formteil, das einen solchen Verbundwerkstoff umfasst und ein Verfahren zur Herstellung eines Verbundwerkstoffs, unter Verwendung mindestens einer zu einem quervernetzten Polymer umsetzbaren Substanz, mindestens einer ersten Füllstofffraktion, die 10 - 80 % Füllstoffe A einer Härte nach Mohs von < 5,5 und eines Partikeldurchmessers d₅₀ < 100 µm umfasst und eines Polymerisationsmittels und/oder Polymerisationsmoderators.

Aus dem Stand der Technik sind Verbundwerkstoffe bekannt, die in vielen Bereichen Anwendung finden können. Ein wichtiger Anwendungsbereich für Verbundwerkstoffe, beispielsweise aus Mineralgut, ist die Beschichtung von Fußboden- oder Wandflächen. Besonders hohe Ansprüche an Verbundwerkstoffe werden im Sanitärbereich oder z.B. bei Küchenspülen gestellt. Sie sind hohen mechanischen und thermischen Belastungen ausgesetzt. Außerdem sind sie üblicherweise sehr gut einsehbar, so dass sie auch dauerhaft ein ansprechendes Erscheinungsbild bieten sollen. Insbesondere bei rein weißen Verbundsystemen, wie sie üblicherweise im Sanitärbereich eingesetzt werden, werden hohe Ansprüche gestellt, da auch kleinste Oberflächenveränderungen besonders gut erkennbar sind. Es ist gewünscht, dass die einzelnen Füllstoffpartikel nicht mehr mit bloßem Auge zu erkennen sind. Es wird eine möglichst homogene, meist weiße Oberfläche ähnlich einer Keramiklasur gewünscht. Eine derartige Oberfläche soll eine möglichst geringe Oberflächenrauigkeit und einen hohen Glanz aufweisen.

Weniger problematisch ist die Herstellung qualitativ hochwertiger Küchenspülen oder Waschbecken, da diese vermehrt je nach Anwendung und Kundenwunsch gefärbt sind. Insbesondere bei acrylat- oder polyestergebundenen Polymeren werden zunehmend Granulate wie Granucol und Granucol-Mischungen als Effektpigmente verwendet und in das jeweilige Polymer eingebettet.

Deutlich höhere Anforderungen werden beispielsweise an Küchenspülen gestellt, da diese gegenüber Sanitärprodukten deutlich höheren mechanischen Beanspruchungen und Temperaturänderungen ausgesetzt sind. Dementsprechend sind auch die Anforderungen an den Füllstoff bzw. das Füllstoffgemisch deutlich unterschiedlich. Während Sanitärprodukte üblicherweise nach DIN13310 für eine Temperaturdifferenz von 70°C (Δt = 70 K) ausgelegt sind, werden Küchenspülen üblicherweise nach DIN14688 für eine Temperaturdifferenz von 90°C (Δt = 90 K) ausgelegt.

Bei Küchenspülen und Sanitärprodukten, unter denen beispielsweise Waschbecken, Duschwannen, Badewannen, Duschtassen und Toilettenschüsseln verstanden werden sollen, ist gewünscht, dass sie in ähnlicher Weise hohen Anforderungen an das Erscheinungsbild genügen. Um jedoch die Verschleißfestigkeit der Oberfläche bei Küchenspülen zu erhöhen, ist bei diesen im Gegensatz zu Sanitärprodukten gewünscht, dass die Füllstoffpartikel etwas über die Polymeroberfläche herausragen und so feine Erhebungen ausbilden. Eine Möglichkeit, dies zu erreichen, besteht beispielsweise darin, dass die Sedimentation von gröberem Material auf die spätere Sichtfläche des Verbundwerkstoffes gefördert wird.

Wie bereits oben erwähnt, werden auch unterschiedliche Anforderungen an das optische Erscheinungsbild gestellt. Während für Sanitärprodukte rein weiße Farben bevorzugt sind, werden für Küchenspülen andere Farbgebungen bevorzugt. Um ein derartiges granit- oder sandsteinähnliches Erscheinungsbild ausbilden zu können, werden als Füllstoff bevorzugt Farbsandmischungen unterschiedlicher Farben genutzt oder dem Bindemittel Pigmente zugesetzt. Als ein besonders gut zur Herstellung derartiger Verbundwerkstoffe geeignetes Verfahren hat sich das "solid surface"-Verfahren etabliert. Bei diesem einstufigen Verfahren wird eine Mischung aus anorganischen Füllstoffen mit einem organischen Bindemittel gemischt und direkt in eine Gussform gefüllt, in der die Masse aushärtet. Die so hergestellten Verbundwerkstoffe sind in der Gesamtheit eingefärbt, so dass sie den Vorteil bieten, dass auch bei Abplatzungen an der Oberfläche keine deutlich erkennbaren Farbunterschiede auftreten.

Als gängige Materialien, die in diesem Verfahren eingesetzt werden können, haben sich Aluminiumtrihydroxid (ATH) und Acryl- oder Polyesterharz etabliert. Auch als Quaryl bezeichnete Mischungen aus u.a. Cristobalit und Acrylharz hat sich etabliert. Das "solid surface"-Verfahren hat sich für Sanitärprodukte etabliert. Besonders vorteilhaft ist, dass nach diesem Verfahren hergestellte Werkstoffe in der Regel mit gängigem Werkzeug nachbearbeitet werden können und auch ein Verbinden durch Kleben ohne sichtbare Klebefolie möglich ist.

Als Nachteil hat sich bei nach diesem Verfahren hergestellten Verbundwerkstoffen jedoch herausgestellt, dass diese aufgrund eines niedrigen E-Moduls leicht zu verkratzen sind. Dementsprechend sind derartige Materialien wenig beständig gegen Abrieb. Ein weiterer wesentlicher Nachteil dieser ATH-gefüllten Verbundwerkstoffe ist, dass sie grundsätzlich nicht hochglänzend herzustellen sind. Auch durch nachträgliches mechanisches Polieren kann keine hochglänzende Oberfläche erzeugt werden. Auch bei sehr gut polierten Oberflächen von mit ATH gefüllten Verbundwerkstoffen dringt das Licht über die an der Oberfläche befindlichen ATH-Partikel in den Verbundwerkstoff ein, wo es gestreut wird. Dieser Effekt kann nur durch Zugabe von hochbrechenden Pigmenten unterbunden werden. Ohne Zugabe von hochbrechenden Pigmenten sind sogar transluzente Verbundwerkstoffe mit ATH als Füllstoff möglich. Werden statt ATH harte, opake mineralische Füllstoffe verwendet, tritt dieses Phänomen nicht oder zumindest nicht in dieser Stärke auf. Da dabei die physikalische bzw. mechanische Oberfläche mit der optischen Oberfläche identisch ist, kann in Abhängigkeit von der Oberflächenrauigkeit ein höherer Glanz erreicht werden.

Neben diesen einstufigen Herstellungsverfahren ist auch ein zweistufiger Prozess bekannt. Für ein derartiges Verfahren wird in der Gussform auf der Seite, die mit der später sichtbaren Seite des Verbundwerkstoffes in Kontakt kommt, eine ca. 0,6mm - 1,0mm dicke Schicht eines Lacks aufgebracht. Nachdem der Lack vollständig getrocknet oder wenigstens angeliert bzw. teilweise polymerisiert ist, wird diese mit einer Mischung aus mineralischem Füllstoff und Bindemittel hinterfüllt. Durch Variation der bei diesem Verfahren verwendeten Füllstoffe und Bindemittel können Eigenschaften des Verbundwerkstoffes moduliert werden. Da jedoch die äußerste Oberflächenschicht ausschließlich aus dem Lack besteht, haben die nach diesem Verfahren hergestellten Verbundwerkstoffe grundsätzlich und unabhängig von der Auswahl der Füllstoffe und Bindemittel den Nachteil, dass ihre Oberflächen recht leicht verkratzen. Darüber hinaus ist eine Nachbearbeitung nur eingeschränkt möglich, da die Lackschicht nicht vorliegt, beschädigt wird oder zumindest stark verdünnt wird.

Es ist daher Aufgabe der Erfindung, einen Verbundwerkstoff und ein Verfahren zu dessen Herstellung bereitzustellen, das die oben beschriebenen Nachteile nicht aufweist und in einem einfachen, kostengünstigen und einstufigen Prozess möglichst in ebenfalls kostengünstigen GFK-Formen herzustellen ist. Ein solcher Verbundwerkstoff sollte sowohl gut und möglichst mit üblichem Werkzeug nachzubearbeiten sein und dabei trotzdem kratz- und abriebbeständig sein. Außerdem ist eine hochglänzende Oberfläche wünschenswert.

Diese Aufgabe wird durch einen Verbundwerkstoff gemäß dem Patentanspruch 1, ein einen solchen Verbundwerkstoff umfassendes Formteil gemäß Anspruch 10 sowie ein Verfahren zur Herstellung eines Verbundwerkstoffes gemäß Patentanspruch 11 gelöst.

Ein wesentlicher Aspekt der Erfindung ist ein Verbundwerkstoff, umfassend mindestens ein quervernetztes Polymer und eine erste Füllstofffraktion, wobei die erste Füllstofffraktion 10 % - 80% Füllstoffe A einer Härte nach Mohs von < 5,5 und einem Partikeldurchmesser d₅₀ < 100 µm umfasst, wobei das quervernetzte Polymer im Verbundwerkstoff einen Gradienten des Quervernetzungsgrades aufweist. Durch einen solchen Gradienten des (Quer-) Vernetzungsgrades unterscheidet sich auch der E-Modul des äußeren und des inneren Bereiches des Verbundwerkstoffes. Bevorzugt weist ein solcher Verbundwerkstoff aber keinen Konzentrationsgradienten der Füllstoffpartikel entlang eines Verbundwerkstoffdurchschnittes auf. Die Füllstoffpartikel liegen demnach in dem Verbundwerkstoff bevorzugt gleichmäßig verteilt vor. Insbesondere ist bevorzugt, dass die Füllstoffpartikel unabhängig von der Entfernung von einer Oberfläche des Verbundwerkstoffes in gleicher Konzentration vorliegen. Als gleiche Konzentration soll in diesem Zusammenhang ein Konzentrationsunterschied von bevorzugt weniger als 5 % angesehen werden.

Die zur Herstellung eines solchen Verbundwerkstoffs geeignete Rohmasse umfassend eine in ein quervernetztes Polymer überführbare Komponente und eine erste Füllstofffraktion mit mindestens einem Füllstoff A wird im Folgenden auch gelegentlich als Composite bezeichnet. Diese Bezeichnung wird auch für Rohmassen verwendet, die weitere Bestandteile wie beispielsweise eine zweite Füllstofffraktion umfassen.

Weitere vorteilhafte Ausführungsformen ergeben sich aus den Unteransprüchen.

Als Gradient des Quervernetzungsgrades des Polymers im Verbundwerkstoff soll ein sich kontinuierlich verändernder Vernetzungsgrad des Polymers im Verbundwerkstoff verstanden werden. Als kontinuierlich soll dabei jeder Verlauf verstanden werden, der keine sprunghafte Veränderung des Quervernetzungsgrades aufweist. Dabei sind lineare und nicht lineare Verläufe möglich. Die Steigungen und/oder Kurvenverläufe (Krümmungsradien) des Verlaufes können in Abhängigkeit von der vorgesehenen Anwendung des Verbundwerkstoffes eingestellt werden.

Bevorzugt verläuft in dem Verbundwerkstoff der Gradient des Vernetzungsgrades entlang einer senkrecht zu einer Verbundwerkstoffoberfläche verlaufenden Richtung. Demnach verändert sich der Quervernetzungsgrad in Abhängigkeit von der Tiefe (dem Abstand von der Oberfläche des Verbundwerkstoffes) im Verbundwerkstoff. Es ist demnach bevorzugt, dass der Gradient der Quervernetzung bzw. des Vernetzungsgrades in Oberflächennähe des Verbundwerkstoffes anders ist als in tieferen Schichten des Verbundwerkstoffes.

In einer besonders bevorzugten Ausführungsform ist der Verbundwerkstoff dadurch gekennzeichnet, dass der Vernetzungsgrad des quervernetzten Polymers in Tiefenrichtung des Verbundwerkstoffes abnimmt. In diesem Fall weist demnach die oberflächennahe Region des Verbundwerkstoffes den höchsten Quervernetzungsgrad auf, wohingegen tiefere Schichten des Verbundwerkstoffes einen geringeren Vernetzungsgrad aufweisen. Demnach unterscheidet sich auch der E-Modul oberflächennaher Schichten und tieferer Schichten des Verbundwerkstoffes. Als Konsequenz des in Tiefenrichtung abnehmenden Vernetzungsgrades weist der Verbundwerkstoff bevorzugt in der oberflächennahen Region einen hohen E-Modul auf und in tiefer liegenden Schichten einen geringen E-Modul.

Die Oberfläche eines solchen Verbundwerkstoffes ist somit besonders hart ausgebildet und bietet besonders gute Eigenschaften in Bezug auf Abrieb, Ritzen oder sonstige Beschädigungen. Der oberflächenferne Anteil des Verbundwerkstoffes bietet demgegenüber aufgrund des geringen E-Moduls eine besondere Flexibilität, die es erlaubt, Belastungen nachgeben zu können. Energien, die auf den Verbundwerkstoff einwirken, können daher über einen großen Bereich abgeführt werden, was im Gegensatz zu anderen, auch im Inneren sehr harten und/oder steifen Werkstoffen das Reißen, Brechen und insbesondere das Abplatzen von oberflächennahen Schichten (Chipping) durch hohe lokale mechanische Beanspruchung verhindert oder zumindest weitgehend reduziert. Die Gefahr derartiger Beschädigungen des Verbundwerkstoffes kann daher deutlich verringert werden.

Generell ist es bei Verbundwerkstoffen erwünscht, den Füllstoffanteil möglichst hoch zu halten, da Füllstoffe in der Regel deutlich günstiger sind als das sie umgebende Polymer. Um einen möglichst großen Füllstoffanteil zu erreichen, ist in einer besonders bevorzugten Ausführungsform des Verbundwerkstoffes vorgesehen, dass der Verbundwerkstoff eine zweite Füllstofffraktion aufweist, wobei die zweite Füllstofffraktion 20 % - 80 % Füllstoffe B einer Härte nach Mohs von >5,5 und einem Partikeldurchmesser d₅₀ von 10 - 500 µm, bevorzugt 10 - 200 µm, weiter bevorzugt 10 - 100 µm umfasst. Durch die verschiedenen Partikelgrößen der Füllstoffe A und B ist eine besonders dichte Packung der Füllstoffe möglich, da die kleiner dimensionierten Füllstoffe A Zwischenräume zwischen den Füllstoffpartikeln B einnehmen können. Die unterschiedliche Härte nach Mohs der Füllstoffpartikel A und B hat sich als vorteilhaft herausgestellt, da so Energien im Inneren des Verbundwerkstoffes besonders effizient verteilt und Energiespitzen abgebaut werden können. Dies hat sich als besonders vorteilhaft in Bezug auf mechanische Belastungen herausgestellt, die Reißen, Brechen und Chipping hervorrufen können.

Bevorzugt ist der Füllstoff A Dolomit. Dolomit als Füllstoff ist auch dann bevorzugt, wenn keine zweite Füllstofffraktion bzw. kein zweiter Füllstoff B vorliegt. Als andere geeignete Füllstoffe A haben sich auch Silikate, Karbonate, Oxide, Sulfate, Polymere und/oder Mischungen davon herausgestellt. Auch wenn Dolomit als Füllstoff A besonders bevorzugt ist, kann als Füllstoff A auch Talkum, Bariumsulfat, Schiefermehl, Magnesit, Calcit, ATH, Kunststoff oder Mischungen davon eingesetzt werden. Gemeinsam haben diese Substanzen, dass sie weltweit in großen Mengen verfügbar sind und vergleichsweise günstig zur Verfügung gestellt werden können. Bei Kunststoffen kann es sich beispielsweise um Recyclingmaterial handeln. Gemeinsam haben diese Substanzen auch, dass sie - wie oben beschrieben - eine vergleichsweise geringe Härte nach Mohs von <5,5 aufweisen.

Sofern eine zweite Füllstofffraktion im Verbundwerkstoff vorliegt, ist besonders bevorzugt, dass es sich dabei um Quarzmehl handelt. Es sind jedoch auch andere Materialien, wie beispielsweise andere Silikate, Carbonate, Sulfate, Oxide oder Mischungen davon möglich. Aufgrund der geforderten Härte nach Mohs von >5,5 sind neben Quarzsand und/oder Quarzmehl besonders Farbquarz, Mullit, Feldspat, Keramik, Korund, Glas oder Mischungen davon bevorzugt. Auch diese Materialien sind in der Regel vergleichsweise günstig global verfügbar. Bei Glas und Keramik kann es sich beispielsweise um Recyclingmaterialien handeln, die auch günstig verfügbar sind.

Wie oben dargestellt, ist es aufgrund des gegenüber dem Polymer günstigeren Füllstoffs vorteilhaft, einen hohen Füllstoffanteil zu erreichen. Besonders bevorzugt weist daher der Verbundwerkstoff einen Füllstoffanteil von 40% - 85% (Gewichtsprozent) auf. Besonders bevorzugt sind Füllstoffanteile von 60%- 80% (Gewichtsprozent). Noch weiter bevorzugt sind Verbundwerkstoffe, die einen Füllstoffanteil von 70% - 80% (Gewichtsprozent) umfassen. Sofern bei Prozentangaben keine anderen Angaben gemacht werden und Masse- oder Gewichtsprozent in dem jeweiligen Zusammenhang sinnvoll sind, sollen Prozentangaben in der Beschreibung dieser Erfindung immer als Gewichtsprozent bzw. Masseprozent verstanden werden.

Wie oben bereits dargestellt wurde, kann aus dem Gradienten des Quervernetzungsgrades auch eine entlang dieses Gradienten verlaufende Änderung des E-Moduls auftreten. Da der E-Modul jedoch nicht ausschließlich vom Quervernetzungsgrad abhängt, könnten theoretisch auch trotz eines veränderten Quervernetzungsgrades im Polymer verschiedene Bereiche dennoch den gleichen E-Modul aufweisen. Besonders bevorzugt ist jedoch, dass in dem Verbundwerkstoff das quervernetzte Polymer einen entlang einer senkrecht zu einer Verbundwerkstoffoberfläche verlaufenden Richtung verlaufenden Gradienten des E-Moduls aufweist. Weiter bevorzugt nimmt der E-Modul in Tiefenrichtung des Verbundwerkstoffes ab. Durch diese Anordnung von verschiedenen Bereichen mit verschiedenem E-Modul können die oben beschriebenen Vorteile in Bezug auf die Beständigkeit der Oberfläche gegenüber diversen Belastungen (z.B. thermische, mechanische) und die notwendige Möglichkeit zur Ableitung von Energie im Inneren des Verbundwerkstoffes zur Vermeidung von Chipping, Brechen und dem Ausbreiten von Rissen erreicht werden. Ein Verbundwerkstoff mit einem solchen Gradienten des E-Moduls ist somit besonders belastbar und bietet gegenüber den aus dem Stand der Technik bekannten Verbundwerkstoffen Vorteile in thermischer Beständigkeit und mechanischer Belastbarkeit.

Neben dem Quervernetzungsgrad hat auch die mittlere Kettenlänge der Polymere einen Einfluss auf den E-Modul. Um den oben beschriebenen Verlauf des E-Moduls im Verbundwerkstoff zu gewährleisten, ist in einer Ausführungsform des Verbundwerkstoffes vorgesehen, dass das Polymer im Verbundwerkstoff einen entlang einer senkrecht zu einer Verbundwerkstoffoberfläche verlaufenden Richtung verlaufenden Gradienten der mittleren Kettenlänge aufweist. Bevorzugt nimmt dabei in Tiefenrichtung des Verbundwerkstoffes die mittlere Kettenlänge des Polymers ab.

Bevorzugt ist ein Verbundwerkstoff, in dem der Vernetzungsgrad des Polymers in dem Bereich des Verbundwerkstoffes, in dem der Vernetzungsgrad minimal ist, weniger als 80% des Vernetzungsgrades des Polymers in dem Bereich des Verbundwerkstoffes beträgt, in dem der Vernetzungsgrad maximal ist. Weiter bevorzugt ist der Vernetzungsgrad in dem Bereich des Verbundwerkstoffes, in dem der Vernetzungsgrad minimal ist, weniger als 60% des Vernetzungsgrades des Polymers in dem Bereich des Verbundwerkstoffes, in dem der Vernetzungsgrad maximal ist. Besonders bevorzugt beträgt der Vernetzungsgrad des Polymers in dem Bereich des Verbundwerkstoffes, in dem der Vernetzungsgrad minimal ist, weniger als 40% des Vernetzungsgrades des Polymers in dem Bereich des Verbundwerkstoffes, in dem der Vernetzungsgrad maximal ist. Diese Gradienten des Vernetzungsgrades haben sich als besonders bevorzugt herausgestellt, da sie aufgrund des verschiedenen E-Moduls im Oberflächenbereich und im Inneren des Verbundwerkstoffes besonders belastbar sind.

Es ist auch ein Verbundwerkstoff bevorzugt, bei dem die mittlere Kettenlänge des Polymers in dem Bereich des Verbundwerkstoffes, in dem die mittlere Kettenlänge minimal ist, weniger als 80% der mittleren Kettenlänge des Polymers in dem Bereich des Verbundwerkstoffes beträgt, in dem die mittlere Kettenlänge maximal ist. Weiter bevorzugt ist ein Verbundwerkstoff, in dem die mittlere Kettenlänge des Polymers in dem Bereich des Verbundwerkstoffes, in dem die mittlere Kettenlänge minimal ist, weniger als 60% der mittleren Kettenlänge des Polymers in dem Bereich des Verbundwerkstoffes beträgt, in dem die mittlere Kettenlänge maximal ist. Besonders bevorzugt ist, dass die mittlere Kettenlänge des Polymers in dem Bereich des Verbundwerkstoffes, in dem die mittlere Kettenlänge minimal ist, weniger als 40% der mittleren Kettenlänge des Polymers in dem Bereich des Verbundwerkstoffes beträgt, in dem die mittlere Kettenlänge maximal ist. Wie oben dargestellt, kann auch die Kettenlänge des Polymers einen Einfluss auf den E-Modul haben, so dass auch die Veränderung der Kettenlänge einen positiven Effekt auf den Verbundwerkstoff haben kann. Die oben genannten Werte haben sich als besonders geeignet erwiesen, da durch derartige Veränderungen der mittleren Kettenlänge der E-Modul in einen Bereich gebracht werden kann, in dem der Verbundwerkstoff besonders belastbar ist.

Ein weiterer wesentlicher Aspekt der Erfindung ist ein Formteil, das einen wie oben beschriebenen Verbundwerkstoff umfasst. Besonders bevorzugt ist ein solches Formteil zur Verwendung im Sanitärbereich geeignet. Bei einem solchen Formteil kann es sich beispielsweise um Waschbecken, Badewannen, Duschtassen, Toiletten oder Ähnliches handeln.

Ein weiterer wesentlicher Aspekt der Erfindung ist ein Verfahren zur Herstellung eines Verbundwerkstoffs, unter Verwendung mindestens einer zu einem quervernetzten Polymer umsetzbaren Substanz, mindestens einer ersten Füllstofffraktion, die 10 - 80 % Füllstoffe A einer Härte nach Mohs von < 5,5 und eines Partikeldurchmessers d₅₀ < 100 µm umfasst und eines Polymerisationsmittels und/oder Polymerisationsmoderators, wobei das Polymerisationsmittel und/oder der Polymerisationsmoderator im Bereich mindestens einer Oberfläche des späteren Verbundwerkstoffs vor der vollständigen Polymerisierung und/oder Quervernetzung des Polymers eingebracht wird/werden und unter Ausbildung eines Quervernetzungsgradienten in den Verbundwerkstoff eindringt.

Durch dieses Verfahren ist es besonders einfach möglich, einen Verbundwerkstoff herzustellen, der eine besonders harte Oberfläche aufweist und durch den Quervernetzungsgradienten Bereiche aufweist, in denen Innere Energie in Wärmeenergie umgewandelt werden kann und so nicht für die Ausbreitung von Rissen, Spalten oder für Chipping zur Verfügung steht.

Besonders bevorzugt ist eine Ausführungsform des Verfahrens, bei dem
das Polymerisationsmittel und/oder der Polymerisationsmoderator diffusionskontrolliert in den aushärtenden Verbundwerkstoff eindringt, wobei die Konzentration des Polymerisationsmittels und/oder der Polymerisationsmoderators graduell abnimmt und so in Abhängigkeit von dessen Eindringtiefe eine verringerte Quervernetzung des Polymers auslöst.

In dieser bevorzugten Ausführungsform ist der Grad der Quervernetzung im Oberflächenbereich höher als im Inneren des Verbundwerkstoffes, so dass die Oberfläche besonders hart und stark Quervernetzt ausgebildet werden kann, wohingegen innere Bereiche des Verbundwerkstoffs einen geringeren Quervernetzungsgrad des Polymers aufweisen.

Weitere Vorteile und Zweckmäßigkeiten sind der nachfolgenden Beschreibung einer beispielhaften Ausführungsform zu entnehmen.

In einem beispielhaften Verbundwerkstoff werden Füllstoffe bis zu einem Füllgrad zwischen 60 und 80 % (Gew.-%) eingesetzt. Die Füllstoffe setzen sich in diesem Beispiel zu 10 - 20 Gew.-% aus Dolomit einer mittleren Korngröße < 100 µm und 60 - 80 Gew.-% Quarz mit einer mittleren Korngröße zwischen 10-200 µm zusammen. Außerdem sind diesem Verbundwerkstoff 10 - 30 Gew.-% andere Füllstoffkomponenten mit einer mittleren Korngröße < 100 µm zugesetzt.

Bei den anderen Füllstoffkomponenten könnte es sich beispielsweise um Pigmente handeln. Im vorliegenden Beispiel handelt es sich jedoch um einen weißen Verbundwerkstoff. Üblicherweise weist dieser bereits einen Weißgrad L* 85 - 95, a* 0 - 2,5 b* -0,5 - 1 auf. Bei einem Weißgrad bis etwa 85 % ist es nicht notwendig zusätzliche Weißpigmente einzusetzen. Wird ein Weißgrad von über 85 % erwünscht, wird bevorzugt ein Weißpigment zugesetzt. Der Weißgrad wird mittels Datacolor 110 TM bestimmt.

In Abhängigkeit des Quervernetzungsgrades kann bei einem derartigen beispielhaften Verbundwerkstoff ein definierter Abrieb eingestellt werden. Im Beispiel beträgt der Abrieb nach Taber Abrasortest < 35 mg/100 Zyklen. Üblicherweise kann die Abriebbeständigkeit nach Taber Abrasortest (nach Iso 9352) im Bereich von 25 mg - 35 mg/100 Zyklen eingestellt werden. Die Messung erfolgt nach Erichesen mittels Taber Abrasor (500 Umdrehungen) in Anlehnung an Waschbecken-Prüfnorm EN 14688. Gemessen wird der Gewichtsverlust der Probe pro 100 Umdrehungen. Die mit dem beispielhaften Verbundwerkstoff (Beispiel 1) erhaltenen Ergebnisse sind in Tabelle 1 zusammen mit Ergebnissen anderer Verbundwerkstoffe dargestellt.

**Tabelle 1:**

| **Taber Abrasor (500 Umdrehungen)** Anlehnung an Waschbecken-Prüfnorm EN 14688 | | | |
|---|---|---|---|
| **Bezeichnung** | **Bindemittel** | **Füllstoff** | **Verlust in mg /100 revs** |
| Sanitäracryl | PMMA | keiner | 33 |
| Quaryl (V&B) | PMMA | Cristobalit | 18-25 |
| Solid Surface | Polyester | ATH | 80-110 |
| Beispiel 1 | Polyester | Neue Füllstoffmischung | 20-35 |
| Gelcoat | Polyester | Keiner | 110-130 |

Die Kratzhärte kann ebenfalls durch den Grad der Quervernetzung des Polymers beeinflusst werden. Im Beispiel liegt sie im Bereich von 2 - 4 N. Geprüft wird auch die Kratzfestigkeit nach Erichesen in Anlehnung an Waschbecken-Prüfnorm EN 14688. Um Kratzspuren beim Gebrauch von z.B. einem Messer oder einem abrasiven Reinigungsmittel zu vermeiden, ist eine hohe Kratzfestigkeit erwünscht. Gemessen wird bei dem Test der Anpressdruck auf eine gehärtete Stahlnadel, die zu einer durchgängigen Kratzspur auf dem Prüfkörper führt. Die Ergebnisse sind in Tabelle 2 dargestellt.

**Tabelle 2:**

| **Kratzfestigkeit** | | | |
|---|---|---|---|
| **Last [N] bis erste erkennbare Kratzspur** | | | |
| **Bezeichnung** | Bindemittel | Füllstoff | [N] |
| Sanitäracryl | PMMA | keiner | 0,7 |
| Quaryll (V&B) | PMMA | Cristobalit | 0,3 |
| Solid Surface | Polyester | ATH | 0,2-0,3 |
| Beispiel 2 | Polyester | Neue Füllstoffmischung | 1-3 |
| Gelcoat | Polyester | Keiner | 0,2-0,3 |

Um derartige Werte zu erreichen, wird der E-Modul auch Werte von 45 - 70 MPa eingestellt. Dieser Wert lässt sich nicht für einzelne Schichten des Verbundwerkstoffs bestimmen. Er wird daher über die gesamte Dicke eines Prüfkörpers gemessen.

Je nach Oberflächenbeschaffenheit, die beispielsweise über die Steilheit des Gradienten des Quervernetzungsgrades eingestellt werden kann, kann ein unterschiedlicher Oberflächenglanz erreicht werden. Im vorliegenden Beispiel ist der Glanz gemessen bei 85° in dem großen Bereich von 20 - 98 % einstellbar. Neben den Oberflächeninhärenten Eigenschaften mit demgegenüber tieferen Schichten des Verbundwerkstoffs höheren E- Modul hat die Art der Oberflächenbehandlung und Nachbearbeitung einen Einfluss auf den Glanz. Die oben angegebenen Werte für den Glanz beziehen sich auch Messanordnungen mit einer Ulbricht Kugel oder Micro-TRI-Gloss.

### Ausführungsbeispiel

Wie bereits oben beschrieben ist es zum Einstellen des Glanzes der Oberfläche eines Gussstücks aus Verbundwerkstoff erforderlich, die Grenzschicht zwischen Gussform und Composite beschleunigt auszuhärten. Durch das vollständige Aushärten der Grenzfläche, während der Bulk noch nicht vollständig ausgehärtet ist, kann vermieden werden, dass sich die Harzschicht an der Grenzfläche Form / Composite zwischen die Füllstoffpartikel zurückzieht. Dadurch würde eine Oberflächenrauigkeit erzeugt werden, die auch den Glanz negativ beeinflussen würde.

Die Polymerisationsgeschwindigkeit des Harzes hängt dabei u.a. von der Konzentration der freien Radikalen pro Zeiteinheit und der Temperatur ab. Die Polymerisation erfolgt in drei Stufen. In der Gelphase (Phase 2) ist das Composite nur zu ca. 60% ausgehärtet. Es liegen dann einzelne voll ausgehärtete Zellen vor, die noch nicht miteinander über Polymerisation verbunden sind. Die endgültige Aushärtung des Composites erfolgt erst während des Nachtemperns bei ca. 80°C für 3 - 4h. Die genaue Temperatur und Zeit ist abhängig von dem jeweils verwendeten Harz.

Es konnte gezeigt werden, dass die Polymerisationsgeschwindigkeit an der Grenzfläche Composite/Gussform gegenüber der Polymerisationsgeschwindigkeit im Bulk des Composites dadurch beschleunigt werden kann, dass die Gussform vor dem Gießen mit Härter (z.B. einem Peroxid) beschichtet wird. Dies führt zu einer erhöhten Konzentration von Radikalen auf der Kontaktfläche und somit auch in den obersten Materialschichten und damit zu einer gegenüber dem Bulk beschleunigten Aushärtung der Grenzschicht.

Der Polymerisationsbeschleuniger kann beispielsweise dadurch aufgebracht werden, dass dieser direkt in die vorbereitete Gussform, insbesondere auf die spätere Sichtseite aufgebracht wird. Dies kann beispielsweise durch Wischen erfolgen. Dabei ist besondere Sorgfalt anzulegen, da bei diesem Verfahren ein ungleichmäßiger Auftrag entstehen kann.

Um einen möglichst gleichmäßigen Auftrag zu erreichen ist es daher vorteilhaft, den Polymerisationsbeschleuniger in die Form zu sprühen. Dies kann beispielsweise mit Luft als Träger erfolgen. Als besser geeignet haben sich jedoch organische Treibgase wie z.B. Propan oder Butan oder Mischungen davon erwiesen.

Es hat sich zudem als besonders Vorteilhaft erwiesen, den Polymerisationsbeschleuniger mit einem Lösungsmittel (z.B. Ethanol, Isopropanol) auf 1 - 5 Gewichtsprozent zu verdünnen. Auch dadurch wird ein gleichmäßiger Auftrag begünstigt.

In einem konkreten Ausführungsbeispiel wird die Form mit Trennmittel vorbehandelt und poliert (Hochglanz). Diese Vorbehandlung ist aus dem Stand der Technik bekannt. Anschließend erfolgt das Einsprühen der so vorbehandelten Formenoberfläche mit dem Polymerisationsbeschleuniger (z.B. verdünnte Peroxidlösung). Im vorliegenden Beispiel wird eine ca. 3 prozentige (Gewichtsprozent) Methyl-ethyl-keton-Peroxid- (MEKP-) Lösung verwendet. In Abhängigkeit von der Konzentration des Peroxids (bzw. der aktiven Komponente ("Wirkkomponente")) ist eine Auftragsmenge zwischen 10 und 20 g/m² erforderlich. Im konkreten Beispiel werden 15 g/m² der MEKP-Lösung aufgetragen. Anschließend wird die Form ruhen gelassen, bis das Lösungsmittel versunstet ist. Zur Beschleunigung der Verdunstung ist optional eine Vorwärmung der Form auf ca. 40°C möglich. Aufgrund der Explosionsgefahr von Peroxiden ist bei der Verwendung von Peroxiden eine höhere Temperatur und weitere Beschleunigung des Verdunstungsprozesses bevorzugt zu vermeiden.

Nach dem Verdunsten des Lösungsmittels verbleibt ein dünner Film des Peroxids auf der Form zurück, der dann mit der Gussmasse überschichtet werden kann. Es schließt sich folglich der eigentliche Gießprozess an. Es besteht die Möglichkeit über die Wahl des Peroxids die Reaktionszeit und auch die Eindringtiefe in das Material einzustellen. Als besonders vorteilhaft haben sich jedoch die erwähnten MEKP-Systeme herausgestellt.

Zudem hat sich gezeigt, dass durch eine geeignete Temperaturführung die Rauigkeit und damit der Glanz gesteuert werden kann. Eine Gussoberfläche ohne Einsatz eines "Glanzadditivs" auf der Form hat eine matte Oberfläche (ca. 20 - 40 % Glanz). Wird jedoch wie oben beschrieben das "Glanzadditiv" MEKP-Lösung in die Form aufgebracht und das Compositmaterial bei Raumtemperatur bis zur Entformung ausgehärtet, ergibt sich bei gleicher Compositzusammensetzung ein seidenmatter Glanz von ca. 40 - 80%. Als Composite wird beispielsweise ein Gemisch aus quervernetzbarem Polyacrylatvorläufer (Mischung aus Methylacrylsäureester und vorpolymerisiertem Methylacrylsäureester und einem Quervernetzungsreagenz), 30% Dolomit mit einem Partikeldurchmesser d₅₀ < 20 µm und 30 % Quarzsand mit einem Partikeldurchmesser d₅₀ von 125 µm verwendet.

Wird das "Glanzadditiv" in die Form aufgebracht und das Compositmaterial für ca. 30 - 60 min bei 70 - 80°C bis zur Entformung ausgehärte t, ergibt sich bei ebenfalls gleicher Compositzusammensetzung jedoch eine hochglänzende Oberfläche von ca. 80 - 98% Glanz. Der maximale mit diesem Verfahren erreichbare Glanz ist durch den maximalen Glanzgrad der Formenoberfläche limitiert.

Besonders Vorteilhaft bei dem beschriebenen Verfahren ist neben der Erzeugung verschiedener Glanzgrade der Werkstücks bei gleicher Form und gleichem Composite die Tatsache, dass das Gussstück bis zum Entformen nicht vollständig ausgehärtet sein muss, sondern im Bulk eine gewisse Elastizität behält. Dies reduziert die Gefahr eines möglichen Bruchs des Gussstücks durch Schwindungen, die z.B. während des Entformens oder des anschließenden Transports entstehen können.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Verbundwerkstoff, umfassend mindestens ein quervernetztes Polymer und einer ersten Füllstofffraktion, wobei die erste Füllstofffraktion 10 - 80 % Füllstoffe A einer Härte nach Mohs von < 5,5 und einen Partikeldurchmesser d₅₀ < 100 µm umfasst **dadurch gekennzeichnet, dass**
das quervernetzte Polymer im Verbundwerkstoff einen Gradienten des Quervernetzungsgrades aufweist.

2. Verbundwerkstoff nach Anspruch 1,
**dadurch gekennzeichnet, dass**
der Gradient des Vernetzungsgrades entlang einer senkrecht zu einer Verbundwerkstoffoberfläche verlaufenden Richtung verläuft.

3. Verbundwerkstoff nach einem der vorangegangenen Ansprüche,
**dadurch gekennzeichnet, dass**
der Vernetzungsgrades des quervernetzten Polymers in Tiefenrichtung des Verbundwerkstoffs abnimmt.

4. Verbundwerkstoff nach einem der vorangegangenen Ansprüche,
**dadurch gekennzeichnet, dass**
der Verbundwerkstoff eine zweite Füllstofffraktion aufweist, wobei die zweite Füllstofffraktion 20 - 80% Füllstoffe B einer Härte nach Mohs von > 5,5 und einem Partikeldurchmesser d₅₀ von 10 - 200 µm, bevorzugt 10 - 100 µm, umfasst.

5. Verbundwerkstoff nach Anspruch 4,
**dadurch gekennzeichnet, dass**
der Füllstoff A Dolomit ist und/oder der Füllstoff B Quarzmehl und/oder Quarzsand ist.

6. Verbundwerkstoff nach einem der vorangegangenen Ansprüche,
**dadurch gekennzeichnet, dass**
das quervernetzte Polymer im Verbundwerkstoff einen entlang einer senkrecht zu einer Verbundwerkstoffoberfläche verlaufenden Richtung verlaufenden Gradienten des E-Modul aufweist, wobei der E-Modul bevorzugt in Tiefenrichtung des Verbundwerkstoffs abnimmt.

7. Verbundwerkstoff nach einem der vorangegangenen Ansprüche,
**dadurch gekennzeichnet, dass**
das Polymer im Verbundwerkstoff einen entlang einer senkrecht zu einer Verbundwerkstoffoberfläche verlaufenden Richtung verlaufenden Gradienten der mittleren Kettenlänge aufweist, wobei die mittlere Kettenlänge bevorzugt in Tiefenrichtung des Verbundwerkstoffs abnimmt.

8. Verbundwerkstoff nach einem der vorangegangenen Ansprüche,
**dadurch gekennzeichnet, dass**
der Vernetzungsgrad des Polymers in dem Bereich des Verbundwerkstoffs in dem der Vernetzungsgrad minimal ist, weniger als 80 %, bevorzugt weniger als 60 %, besonders bevorzugt weniger als 40 % des Vernetzungsgrads des Polymers in dem Bereich des Verbundwerkstoffs beträgt, in dem der Vernetzungsgrad maximal ist.

9. Verbundwerkstoff nach einem der vorangegangenen Ansprüche,
**dadurch gekennzeichnet, dass**
die mittlere Kettenlänge des Polymers in dem Bereich des Verbundwerkstoffs in dem die mittlere Kettenlänge minimal ist, weniger als 80 %, bevorzugt weniger als 60 %, besonders bevorzugt weniger als 40 % der mittleren Kettenlänge des Polymers in dem Bereich des Verbundwerkstoffs beträgt, in dem die mittlere Kettenlänge maximal ist.

10. Verbundwerkstoff nach einem der vorangegangenen Ansprüche,
**dadurch gekennzeichnet, dass**
dessen Oberfläche einen Glanz zwischen 20 - 98 % aufweist.

11. Formteil,
**dadurch gekennzeichnet, dass**
es einen Verbundwerkstoff gemäß einem der Ansprüche 1 - 10 umfasst, wobei das Formteil bevorzugt zur Verwendung im Sanitärbereich geeignet ist.

12. Verfahren zur Herstellung eines Verbundwerkstoffs, unter Verwendung mindestens einer zu einem quervernetzten Polymer umsetzbaren Substanz, mindestens einer ersten Füllstofffraktion, die 10 - 80 % Füllstoffe A einer Härte nach Mohs von < 5,5 und eines Partikeldurchmessers d₅₀ < 100 µm umfasst und eines Polymerisationsmittels und/oder Polymerisationsmoderators,
**dadurch gekennzeichnet, dass**
das Polymerisationsmittel und/oder der Polymerisationsmoderator im Bereich mindestens einer Oberfläche des späteren Verbundwerkstoffs vor der vollständigen Polymerisierung und/oder Quervernetzung des Polymers eingebracht wird/werden und unter Ausbildung eines Quervernetzungsgradienten in den Verbundwerkstoff eindringt.

13. Verfahren nach Anspruch 12,
**dadurch gekennzeichnet, dass**
das Polymerisationsmittel und/oder der Polymerisationsmoderator diffusionskontrolliert in den aushärtenden Verbundwerkstoff eindringt, wobei die Konzentration des Polymerisationsmittels und/oder der Polymerisationsmoderators graduell abnimmt und so in Abhängigkeit von dessen Eindringtiefe eine verringerte Quervernetzung des Polymers auslöst.

## Claims

1. Composite material comprising at least one cross-linked polymer and a first filler fraction, the first filler fraction comprising 10-80 % of filler A having a hardness on the Mohs scale of < 5.5 and a particle diameter d50 of < 100 µm,
**characterised in that**
the cross-linked polymer in the composite material has a gradient of the degree of cross-linking.

2. Composite material according to claim 1,
**characterised in that**
the gradient of the degree of cross-linking extends in a direction extending perpendicularly to a composite material surface.

3. Composite material according to either of the preceding claims,
**characterised in that**
the degree of cross-linking of the cross-linked polymer decreases in the depth direction of the composite material.

4. Composite material according to any of the preceding claims,
**characterised in that**
the composite material comprises a second filler fraction, the second filler fraction comprising 20-80 % of filler B having a hardness on the Mohs scale of > 5.5 and a particle diameter d50 of 10-200 µm, preferably 10-100 µm.

5. Composite material according to claim 4,
**characterised in that**
the filler A is dolomite and/or the filler B is silica flour and/or silica sand.

6. Composite material according to any of the preceding claims,
**characterised in that**
the cross-linked polymer in the composite material has a gradient of elastic modulus which extends in a direction extending perpendicularly to a composite material surface, the elastic modulus preferably decreasing in the depth direction of the composite material.

7. Composite material according to any of the preceding claims,
**characterised in that**
the polymer in the composite material has a gradient of the average chain length which extends in a direction extending perpendicularly to a composite material surface, the average chain length preferably decreasing in the depth direction of the composite material.

8. Composite material according to any of the preceding claims,
**characterised in that**
the cross-linking degree of the polymer in the region of the composite material in which the cross-linking degree is at a minimum is less than 80 %, preferably less than 60 %, particularly preferably less than 40 %, of the cross-linking degree of the polymer in the region of the composite material in which the cross-linking degree is at a maximum.

9. Composite material according to any of the preceding claims,
**characterised in that**
the average chain length of the polymer in the region of the composite material in which the average chain length is at a minimum is less than 80 %, preferably less than 60 %, particularly preferably less than 40 %, of the average chain length of the polymer in the region of the composite material in which the average chain length is at a maximum.

10. Composite material according to any of the preceding claims,
**characterised in that**
the surface thereof has a sheen of between 20 and 98 %.

11. Shaped part,
**characterised in that**
it comprises a composite material according to any of claims 1 to 10, the shaped part preferably being suitable for use in the sanitary sector.

12. Method for producing a composite material using at least one substance which can be reacted to form a cross-linked polymer, at least one first filler fraction, which comprises 10-80 % of filler A having a hardness on the Mohs scale of < 5.5 and a particle diameter d50 of < 100 µm, and a polymerisation agent and/or polymerisation moderator,
**characterised in that**
the polymerisation agent and/or the polymerisation moderator is/are introduced in the region of at least one surface of the subsequent composite material before the polymer has been completely polymerised and/or cross-linked, and penetrate(s) the composite material, thus forming a cross-linking gradient.

13. Method according to claim 12,
**characterised in that**
the polymerisation agent and/or the polymerisation moderator penetrates the cured composite material in a diffusion-controlled manner, the concentration of the polymerisation agent and/or the polymerisation moderator gradually decreases, and therefore, depending on the depth of penetration thereof, causes the cross-linking of the polymer to be reduced.

## Revendications

1. Matériau composite, comprenant au moins un polymère réticulé et une première fraction de matière de charge, la première fraction de matière de charge comprenant 10 à 80 % de matières de charge A ayant une dureté selon Mohs < 5,5 et une granulométrie d50 < 100 µm, **caractérisé en ce que** le polymère réticulé présente dans le matériau composite un gradient du degré de réticulation.

2. Matériau composite selon la revendication 1, **caractérisé en ce que** le gradient du degré de réticulation varie le long d'une direction courant perpendiculairement à une surface du matériau composite.

3. Matériau composite selon l'une des revendications précédentes, **caractérisé en ce que** le degré de réticulation du polymère réticulé diminue dans la direction en profondeur du matériau composite.

4. Matériau composite selon l'une des revendications précédentes, **caractérisé en ce que** le matériau composite présente une deuxième fraction de matière de charge, la deuxième fraction de matière de charge comprenant 20 à 80 % de matières de charge B ayant une dureté selon Mohs > 5,5 et une granulométrie d50 de 10 à 200 µm, de préférence de 10 à 100 µm.

5. Matériau composite selon la revendication 4, **caractérisé en ce que** la matière de charge A est la dolomite et/ou la matière de charge B est la farine de quartz et/ou le sable quartzeux.

6. Matériau composite selon l'une des revendications précédentes, **caractérisé en ce que** le polymère réticulé présente dans le matériau composite un gradient du module d'élasticité qui varie le long d'une direction courant perpendiculairement à une surface du matériau composite, le module d'élasticité diminuant de préférence dans la direction en profondeur du matériau composite.

7. Matériau composite selon l'une des revendications précédentes, **caractérisé en ce que** le polymère présente dans le matériau composite un gradient de la longueur de chaîne moyenne, qui varie le long d'une direction courant perpendiculairement à une surface du matériau composite, la longueur de chaîne moyenne diminuant de préférence dans la direction en profondeur du matériau composite.

8. Matériau composite selon l'une des revendications précédentes, **caractérisé en ce que** le degré de réticulation est, dans la zone du matériau composite dans laquelle le degré de réticulation est minimal, inférieur à 80 %, de préférence inférieur à 60 %, d'une manière particulièrement préférée inférieur à 40 % du degré de réticulation du polymère dans la zone du matériau composite dans laquelle le degré de réticulation est maximal.

9. Matériau composite selon l'une des revendications précédentes, **caractérisé en ce que** la longueur de chaîne moyenne du polymère est, dans la zone du matériau composite dans laquelle la longueur de chaîne moyenne est minimale, inférieure à 80 %, de préférence inférieure à 60 %, d'une manière particulièrement préférée inférieure à 40 % de la longueur de chaîne moyenne du polymère dans la zone du matériau composite dans laquelle la longueur de chaîne moyenne est maximale.

10. Matériau composite selon l'une des revendications précédentes, **caractérisé en ce que** sa surface présente un brillant compris entre 20 et 98 %.

11. Objet moulé, **caractérisé en ce qu'**il comprend un matériau composite selon l'une des revendications 1 à 10, l'objet moulé convenant de préférence à une utilisation dans le domaine sanitaire.

12. Procédé de fabrication d'un matériau composite, par utilisation d'au moins une substance pouvant être convertie en un polymère réticulé, d'au moins une première fraction de matière de charge, qui comprend 10 à 80 % de matières de charge A ayant une dureté selon Mohs < 5,5 et une granulométrie d50 < 100 µm, et d'un agent de polymérisation et/ou d'un modulateur de polymérisation, **caractérisé en ce que** l'agent de polymérisation et/ou le modérateur de polymérisation est/sont introduits dans la zone d'au moins une surface du matériau composite ultérieur, avant la polymérisation et/ou la réticulation complètes du polymère, et pénètrent dans le matériau composite avec formation d'un gradient de réticulation.

13. Procédé selon la revendication 12, **caractérisé en ce que** l'agent de polymérisation et/ou le modérateur de polymérisation pénètrent, avec contrôle de diffusion, dans le matériau composite à durcir, la concentration de l'agent de polymérisation et/ou du modérateur de polymérisation diminuant progressivement et déclenchant ainsi, en fonction de leur profondeur de pénétration, une réticulation réduite du polymère.
